# EUROPEAN PATENT APPLICATION

(11) **EP 4 733 230 A1**
(43) Date of publication of application: **29.04.2026**
(21) Application number: 25210509.3
(22) Date of filing: 22.10.2025
(51) Int. Cl.: B65G 47/64, B65G 47/71, B65G 59/04

(54) **DEPALLETIZING MACHINE**

(30) Priority: 24.10.2024 IT 202400023721
(71) Applicant: OMA S.R.L., 37069 Villafranca di Verona (VR) (IT)
(72) Inventor: BALDI, Eros, 37069 VILLAFRANCA DI VERONA (VR) (IT); BALDI, Fedra, 37069 VILLAFRANCA DI VERONA (VR) (IT); MARRA, Alex, 37069 VILLAFRANCA DI VERONA (VR) (IT)
(74) Representative: Studio Torta S.p.A.

(57) **Abstract**

A depalletizing machine (1) comprising: a rigid supporting framework (2), which is adapted to stably rest on the ground; a lifting platform (3), which is adapted to receive resting above the pallet to be unpacked (100) and is vertically movable on said rigid supporting framework (2), so as to lift the pallet (100) from the ground to align the upper layer (102) of the pallet to an elevated reference plane (P); an auxiliary movable platform (4), which is dimensioned to receive/accommodate a single row (103) of products (101) coming from the pallet (100), and is vertically movable on said rigid supporting framework (2), beside the lifting platform (3); a gripping unit (5), which is adapted to firmly seize and hold an entire row (103) of products (101), and is horizontally movable on the rigid supporting framework (2) between a first operating position wherein the gripping unit (5) is arranged at the side of the lifting platform (3), substantially vertically aligned to the auxiliary movable platform (4), and a second operating position wherein the gripping unit (5) is vertically aligned to the lifting platform (3) so as to be seize and hold a single row (103) of products (101) from the upper layer (102) of the pallet to be unpacked (100); and a pair of outlet conveyors (7, 8), which are adapted to feed a succession of loose products (101) at the outlet of the machine, and are placed beside the vertical aisle engaged by the auxiliary movable platform (4), one spaced beneath the other, so as to receive the loose products (101) from the auxiliary movable platform (4).

## Description

### CROSS-REFERENCE TO RELATED APPLICATIONS

This patent application claims priority from Italian patent application no. 102024000023721 filed on October 24, 2024, the entire disclosure of which is incorporated herein by reference.

### TECHNICAL FIELD

The present invention relates to a depalletizing machine.

More in particular, the present invention relates to a compact depalletizing machine for pallets/platforms of glass bottles, tins, cans for beverages and the like. Use to which the following disclosure will make explicit reference without thereby losing generality.

### STATE OF THE ART

As is known, in the packaging machine field there are numerous models of depalletizing machines that are capable of unpacking in a completely automatic manner a pallet of bottles, tins or cans, providing at outlet a succession of loose products, ready to be sent to other machines.

Patent application EP3812320 A1 describes a small-sized depalletizing machine, which comprises: a lifting platform, which receives resting above the pallet to be unpacked and is capable of step-lifting the pallet to be unpacked, so as to align, each time, the upper layer of the pallet to be unpacked to a horizontal reference plane, which is generally at a height of about 2 metres from the ground; a small auxiliary movable platform, which is dimensioned so as to accommodate a single row of products at a time, and is vertically movable beside the lifting platform between an upper position in which the auxiliary movable platform is aligned with the horizontal reference plane, and is therefore adjacent to the upper layer of the pallet to be unpacked, and a lower position in which the auxiliary movable platform is spaced beneath the horizontal reference plane, at the side of a small belt conveyor, which is capable of receiving and transferring the loose products to the outside of the depalletizing machine; and an oblong-shaped gripping unit, which is movable along said horizontal reference plane, to and from the upper layer of the pallet to be unpacked while always remaining parallel to itself, and is capable of moving a single row of products at a time from the top of the pallet to be unpacked to the auxiliary movable platform stationary in the upper position.

More in detail, the gripping unit of the depalletizing machine according to patent application EP3812320 A1 comprises: a transversal support beam, which is arranged in a horizontal position at the side of the top of the pallet to be unpacked, and is horizontally movable on the horizontal reference plane to and from the upper layer of the pallet to be unpacked while always remaining parallel to itself; an auxiliary floating bar, which is fixed to the support beam so as to remain suspended alongside and parallel to the latter, and is capable of moving vertically with respect to the same support beam by a few centimetres, while always remaining parallel to itself; and a vacuum gripping equipment, which is placed on the lateral flank of the auxiliary floating bar, on the opposite side with respect to the support beam, and is capable of seizing and holding a single row of products at a time by gripping the lateral side of the various products.

Even more in detail, the transversal support beam is capable of moving back and forth on the horizontal reference plane, between a pick-up position in which the support beam arranges the floating bar adjacent to a lateral row of the upper layer of the pallet to be unpacked, so that the vacuum gripping equipment can firmly seize and hold the entire row of products; and a release position in which the support beam is arranged at the side of the lifting platform, with the floating bar vertically aligned with the auxiliary movable platform, so as to allow the vacuum gripping equipment to release the row of products resting on the auxiliary movable platform stationary in the upper position.

### SUMMARY OF THE INVENTION

Aim of the present invention is to make the depalletizing machine according to patent application EP3812320 A1 more versatile and effective in unpacking pallets of tins and cans for beverages, while at the same time improving its hourly productivity.

According to the present invention, there is provided a depalletizing machine as defined in Claim 1 and preferably, though not necessarily, in any one of the claims dependent thereon.

In addition, according to the present invention, there is provided a depalletizing machine comprising: a rigid supporting framework, which is adapted to stably rest on the ground; a lifting platform, which is adapted to receive resting above the pallet to be unpacked and is vertically movable on the rigid supporting framework, so as to lift the pallet to be unpacked from the ground and align the upper layer of the pallet to an elevated reference plane; an auxiliary movable platform, which is dimensioned so as to receive/accommodate a row of products coming from the pallet stationary on the lifting platform, and is vertically movable on the rigid supporting framework, beside the lifting platform; and a gripping unit, which lies on said reference plane, is adapted to firmly seize and hold an entire row of products, and is horizontally movable on the rigid supporting framework between a first operating position in which the gripping unit is located at the side of the lifting platform, substantially vertically aligned with the auxiliary movable platform, and a second operating position in which the gripping unit is vertically aligned with the lifting platform so as to be able to seize and hold a single row of products from the upper layer of the pallet to be unpacked;
the depalletizing machine being **characterised in that** said auxiliary movable platform is vertically movable between: a loading position in which the auxiliary movable platform is aligned to said reference plane and is capable to load/receive a row of products from said gripping unit; a first unloading position in which the auxiliary movable platform is horizontally aligned to a first outlet conveyor, which is located beside the vertical aisle engaged by said auxiliary movable platform spaced beneath said reference plane, so as to unload the previously loaded row of products onto said first outlet conveyor; and a second unloading position in which the auxiliary movable platform is horizontally aligned to a second outlet conveyor, which is located beside the vertical aisle engaged by said auxiliary movable platform, spaced beneath said reference plane and spaced above the first outlet conveyor, so as to unload the previously loaded row of products onto said second outlet conveyor.

### BRIEF DESCRIPTION OF THE DRAWINGS

The present invention will now be described with reference to the accompanying drawings, which illustrate a non-limiting embodiment thereof, wherein:
- Figure 1 is a perspective view of a depalletizing machine realized according to the teachings of the present invention, with parts removed for clarity's sake;
- Figures 2, 3, 4 and 5 show, in perspective view, some details of the depalletizing machine shown in Figure 1, with parts in section and parts removed for clarity's sake;
- Figure 6 is a side view of the depalletizing machine shown in Figure 1, sectioned parallel to the machine vertical midplane and with parts removed for clarity's sake;
- Figure 7 is a perspective view of the gripping unit of the depalletizing machine shown in the preceding figures, with parts removed for clarity's sake;
- Figure 8 is a side view of the depalletizing machine shown in the preceding figures during operation, sectioned parallel to the machine vertical midplane and with parts removed for clarity's sake; whereas
- Figure 9 is a perspective view of the pusher device arranged on the top of the depalletizing machine shown in the preceding figures, with parts removed for clarity's sake.

### DETAILED DESCRIPTION OF THE EMBODIMENTS

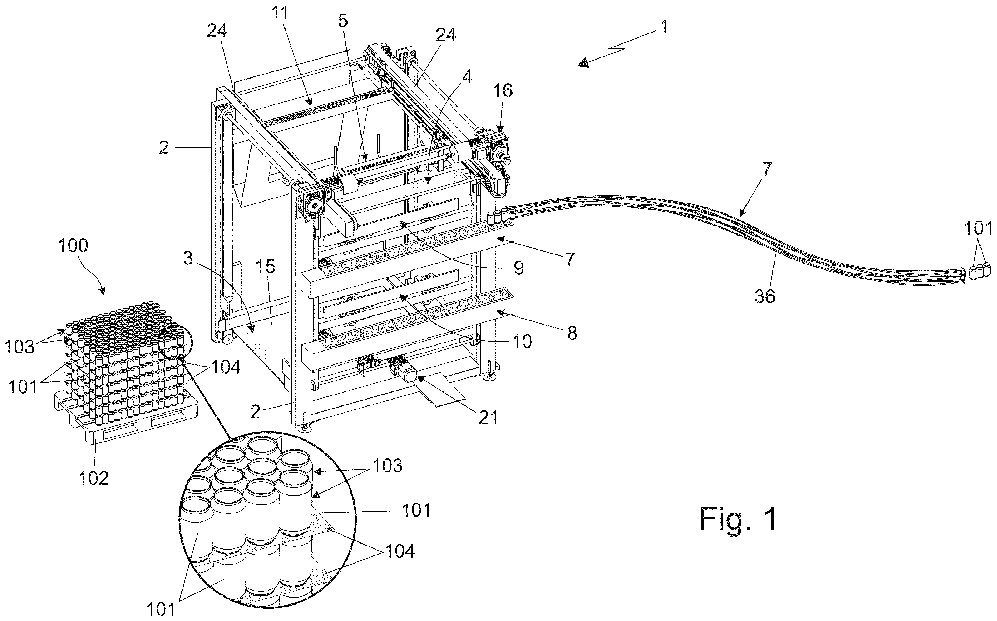

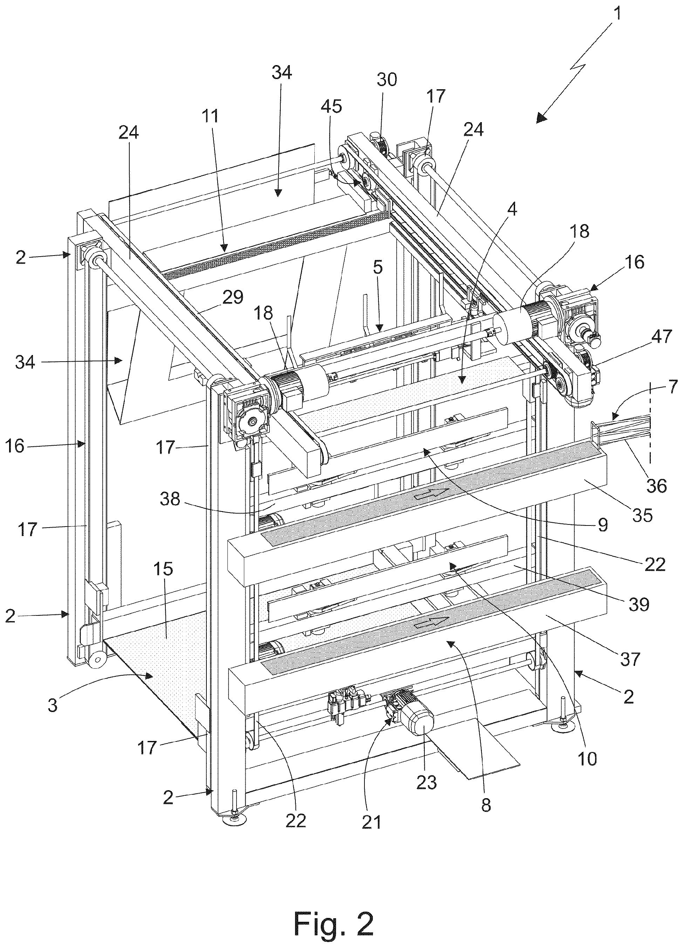

With reference to Figures 1 to 6, number 1 denotes, as a whole, a depalletizing machine adapted to automatically unpack a pallet or platform of products 100, providing at outlet a succession of loose products 101, ready to be used by other machines.

In other words, the depalletizing machine 1 is adapted to receive at inlet a pallet of products 100 and to provide at outlet a succession of loose products 101.

Preferably these loose products 101 are moreover cans for beverages (open on the top) and/or bottles.

More in detail, the depalletizing machine 1 is particularly adapted to unpack, in a completely automatic manner, a roughly parallelepipedal-shaped object, which is made up of a determined number of layers of products that are stacked one on top of the other and are resting on a transport platform 102 of known type, advantageously rectangular or square in shape.

Additionally, each layer of products is basically made up of a plurality of rows of products 103 arranged closely juxtaposed to each other, each of which is made up of predetermined number of loose products 101 aligned and juxtaposed next to one another.

More in detail, the rows of products 103 forming a same layer of products are arranged closely juxtaposed to each other preferably according to a quincunx distribution, and are advantageously located resting on a support-board or tray 104 which, in turn, rests on the immediately underlying layer of products.

In the example shown, in particular, the pallet of products 100 is preferably a pallet of cans for beverages open at the top and, advantageously, made of aluminium, whereby the depalletizing machine 1 provides at outlet a succession of loose cans 101.

Clearly the depalletizing machine 1 may also be used to automatically unpack a pallet of bottles, glass jars or similar products, providing at outlet a succession of loose products, ready to be used by other machines.

With reference to Figures 1 to 6, the depalletizing machine 1 firstly comprises a rigid supporting framework 2, which is preferably made of metal material, and more in detail of rectilinear metal section bars firmly fixed to each other, and is adapted to be stably rested on and optionally anchored to the ground.

The depalletizing machine 1 additionally comprises: a lifting platform 3, which is adapted to receive resting above the pallet to be unpacked 100, and is fixed on the supporting framework 2 with the capability of moving vertically, so as to lift the pallet to be unpacked 100 from the ground and arrange the upper layer of the pallet at an elevated and substantially horizontal reference plane P, which is at a predetermined height h₀ from ground; and an auxiliary movable platform 4, which is dimensioned so as to temporarily receive/accommodate solely one row of products 103, or rather only one row of cans 101 or other products coming from the pallet 100 stationary on the lifting platform 3, and is fixed on the supporting framework 2 beside the lifting platform 3, with the capability of moving vertically independently with respect to the lifting platform 3.

In other words, the lifting platform 3 is adapted to lift from ground the pallet to be unpacked 100 so as to align, each time, the upper layer of the pallet 100 with the elevated plane P.

In the example shown, in particular, the elevated plane P is at a height from ground h₀ preferably ranging between 2 and 3 m (metres), and/or greater than the maximum height of the pallets 100 to be unpacked.

Additionally, the depalletizing machine 1 moreover comprises a movable gripping unit 5, which is fixed on the supporting framework 2 so as to move horizontally on the elevated plane P, and is structured so as to transfer a single row of products 103 at a time, or rather a single row of cans 101 or other products belonging to the pallet 100, from the top of the pallet to be unpacked 100 to the auxiliary platform 4.

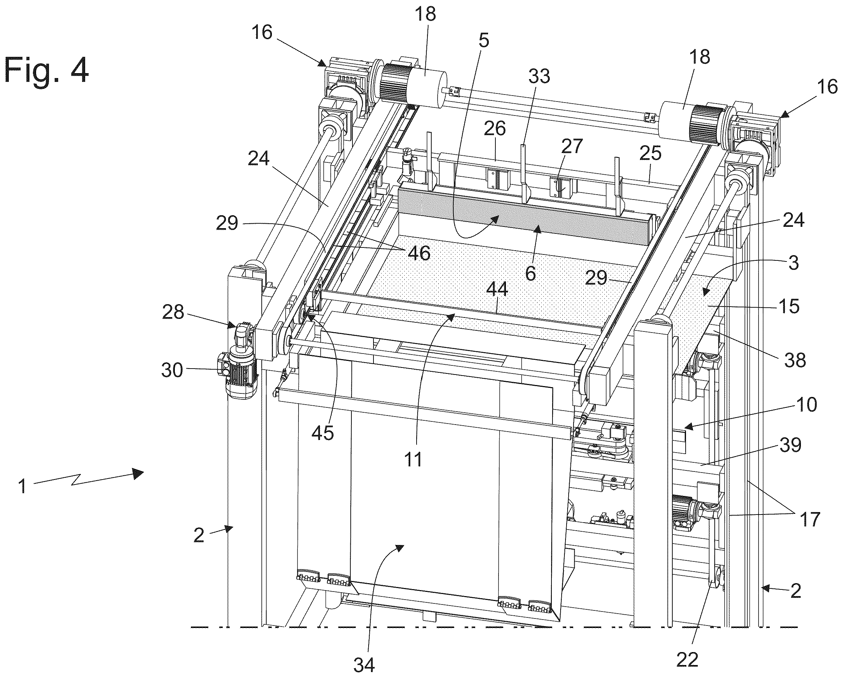

More in detail, with reference to Figures 4, 5, 6 and 8, the auxiliary movable platform 4 is preferably oblong in shape and extends horizontally grazing the vertical aisle engaged by the lifting platform 3.

In addition, the auxiliary platform 4 is superiorly provided with an oblong-shaped horizontal support surface, which is advantageously dimensioned so as to accommodate a one and only row of products 103 of the pallet 100, or rather a single row of cans 101 or other products coming from the pallet 100 stationary on the lifting platform 3.

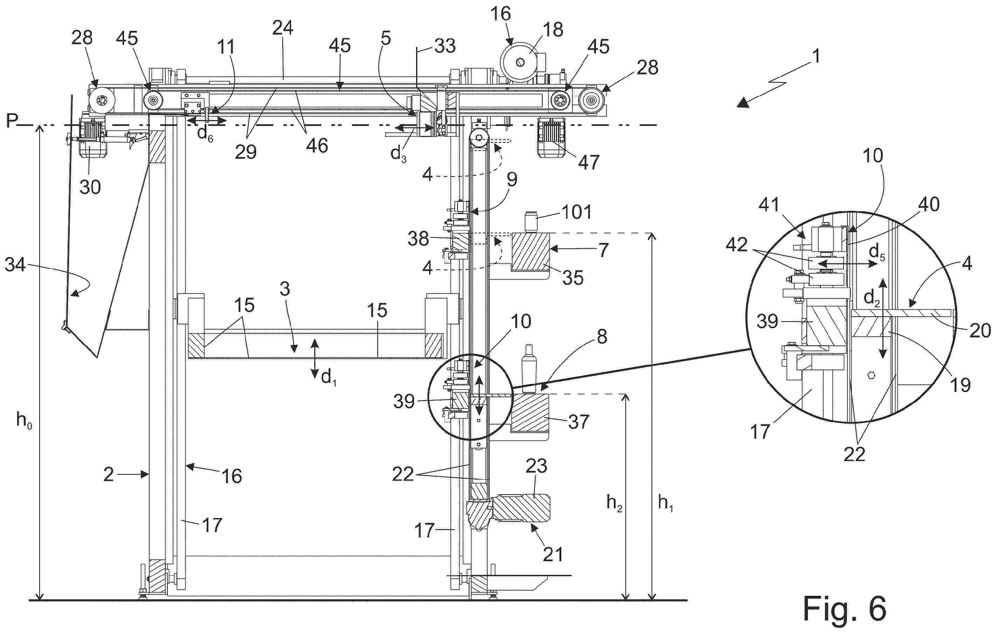

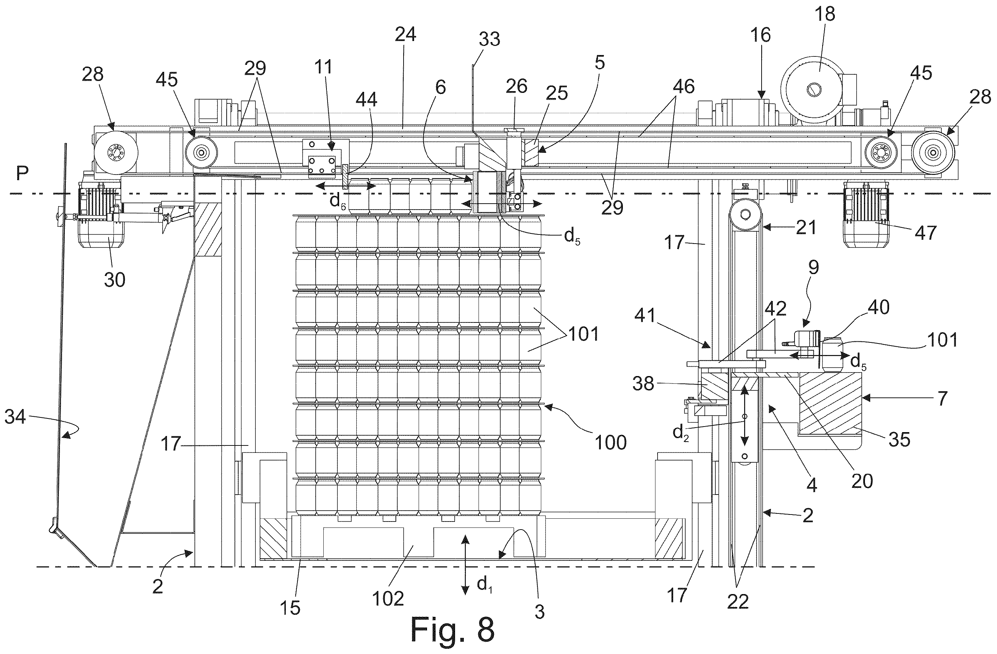

With particular reference to Figure 6, the auxiliary platform 4 is moreover vertically movable at the side of the lifting platform 3, between a loading position (see Figures 4, 5 and 6) and two different and distinct unloading positions vertically offset from each other (see Figures 6 and 8).

In the loading position, the auxiliary platform 4 is aligned with the horizontal reference plane P, i.e. is substantially coplanar with the elevated plane P, and is capable of loading/receiving, from the movable gripping unit 5, a row of products 103, or rather of cans 101 or other products belonging to the upper layer of the pallet to be unpacked 100 stationary on the lifting platform 3.

In the first unloading position (see Figures 6 and 8), the auxiliary movable platform 4 is located at a predetermined first height from ground h₁ lower than the height from ground h₀ of the elevated plane P, and is capable of unloading the row of products 103, or rather the row of cans 101 or other products previously received from the gripping unit 5.

More in detail, the height h₁ is preferably equal to or greater than 75% of the height from ground h₀ of the elevated plane P.

In the second unloading position (see Figure 6), the auxiliary movable platform 4 is located at a predetermined second height from the ground h₂ lower than the height from ground h₁ of the first unloading position, and is likewise capable of unloading the row of products 103, or rather the row of cans 101 or other products previously received from the gripping unit 5.

More in detail, the height h₂ is preferably equal to or greater than 40% of the height from ground h₀ of the elevated plane P.

In the example shown, in particular, the height from ground h₁ preferably ranges between 1,8 and 2,2 m (metres), whereas the height from ground h₂ preferably ranges between 0,5 and 1,2 m (metres).

With reference to Figures 1 to 7, the gripping unit 5 in turn lies on and is movable back and forth on the elevated plane P, advantageously while remaining always parallel to itself, between a first operating position (see Figures 1 to 6) in which it is arranged at the side of the top of the vertical aisle engaged by the lifting platform 3, substantially vertically aligned to the auxiliary platform 4, and a second operating position (see Figure 8) in which it is vertically aligned with the lifting platform 3, i.e. it is located at the top of the vertical aisle engaged by the lifting platform 3.

Additionally, the gripping unit 5 is structured so as to seize and hold (simultaneously) all the loose products 101 that make up a single row of products 103 of the upper layer of the pallet 100 stationary on the lifting platform 3.

Therefore, when it is in the second operating position (see Figure 8), the gripping unit 5 is capable of seizing and holding a row of products 103 present on the top of the pallet 100 stationary on the lifting platform 3. When, on the other hand, it is in the first operating position (see Figures 1 to 6), the gripping unit 5 is capable to deposit the row of products 103 onto the auxiliary platform 4 stationary in the loading position.

More in detail, the gripping unit 5 is preferably oblong in shape, and is preferably provided with a vacuum gripping equipment 6, which lies substantially on the elevated plane P and is capable of firmly seizing and holding all the products that concur in making up a single row of products 103 of the upper layer of the pallet to be unpacked 100, by vacuum gripping on the side of the individual loose products 101 advantageously regardless of the shape and/or dimensions of the individual loose products 101.

In other words, the gripping unit 5 is preferably provided with a vacuum gripping equipment 6, which is capable of seizing and holding (simultaneously) all the cans 101 forming a row of products 103 of the upper layer of the pallet to be unpacked 100, via vacuum gripping on the side of the cylindrical trunk of the individual cans 101, regardless of the shape and/or dimensions of the same cans 101.

Clearly the vacuum gripping equipment 6 is also capable of firmly seizing and holding (glass) bottles, jars and similar containers.

Therefore, in the first operating position (see Figures 1 to 6), the gripping unit 5 allows the vacuum gripping equipment 6 to deposit a row of products 103 on the auxiliary platform 4 stationary in the loading position.

In the second operating position (see Figure 8), in turn, the gripping unit 5 arranges itself adjacent to the loose products 101 forming a lateral row of products 103 of the upper layer of the pallet 100 stationary on the lifting platform 3, so that the vacuum gripping equipment 6 can rest on the loose products 101 that make up the same lateral row of products 103, so as to firmly seize and hold (all) the loose products 101 of said lateral row.

In other words, the gripping unit 5 is movable back and forth on the elevated plane P to and from a second operating position (see Figure 8) in which the gripping unit 5 is adjacent to the cans 101 forming a lateral row 103 of the upper layer of the pallet 100 stationary on the lifting platform 3, so that the vacuum gripping equipment 6 can rest on the cans 101 that make up said lateral row 103, in order to firmly seize and hold (all) the cans 101 of the same lateral row.

With reference to Figures 1 to 6, in addition the depalletizing machine 1 moreover comprises a pair of outlet conveyors 7 and 8, which are adapted to feed/convey, at outlet of the depalletizing machine 1, a succession of loose products 101 coming from the pallet 100 stationary on the lifting platform 3, and are located beside the vertical aisle engaged by the auxiliary platform 4, advantageously on the opposite side with respect to the vertical aisle engaged by the lifting platform 3, one spaced beneath the other and both spaced beneath the elevated plane P.

More in detail, the outlet conveyor 7 is located at a height from ground substantially equal to the height h₁, so as to be horizontally aligned with the auxiliary platform 4 when in said first unloading position, and is preferably adapted to transfer, outside the depalletizing machine 1, the cans 101 coming from the top of the pallet 100 stationary on the lifting platform 3.

The outlet conveyor 8, in turn, is located at a height from ground substantially equal to the height h₂ so as to be horizontally aligned with the auxiliary platform 4 when in said second unloading position, and is preferably adapted to transfer, outside the depalletizing machine 1, the bottles or other loose products 101 coming from the top of the pallet 100 stationary on the lifting platform 3.

With reference to Figures 1, 2, 5, 6 and 8, in particular, the outlet conveyor 7 is preferably superiorly provided with a products- resting and/or advancing plane, advantageously substantially horizontal, which is located at a height from ground substantially equal to the height h₁, and is preferably dimensioned so as to receive a single row of cans 101 or other products coming from the pallet 100 stationary on the lifting platform 3, and to feed a succession of loose cans 101 or other products at outlet of the depalletizing machine 1.

In the first unloading position, therefore, the support surface of the auxiliary platform 4 is preferably substantially coplanar and adjacent to the products-resting and/or advancing plane of the outlet conveyor 7.

The outlet conveyor 8, in turn, is preferably superiorly provided with a products- resting and/or advancing plane, advantageously substantially horizontal, which is at a height from ground substantially equal to the height h₂, and is preferably dimensioned so as to receive a single row of bottles 101 or other products coming from the pallet 100 stationary on the lifting platform 3, and to feed a succession of bottles 101 or loose products at the outlet of the depalletizing machine 1.

In the second unloading position, therefore, the support surface of the auxiliary platform 4 is preferably substantially coplanar and adjacent to the products- resting and/or advancing plane of the outlet conveyor 8.

With reference to Figures 1 to 8, the depalletizing machine 1 is preferably furthermore provided with a pair of products moving assemblies 9 and 10, which are firmly fixed on the supporting framework 2, each horizontally aligned to a respective outlet conveyor 7, 8, and are adapted to transfer, on command, the loose products 101 from the auxiliary platform 4 to the immediately adjacent outlet conveyor 7, 8, when the auxiliary platform 4 is horizontally aligned with the same outlet conveyor 7, 8, i.e. when the auxiliary platform 4 is in the first or in the second unloading position.

More in detail, each products moving assembly 9, 10 is preferably structured so as to horizontally push the entire row of loose products 101 stationary on the auxiliary platform 4, from the auxiliary platform 4 momentarily stationary in the first or in the second unloading position, to the immediately adjacent outlet conveyor 7 or 8.

Even more specifically, the products moving assembly 9 is substantially horizontally aligned to the outlet conveyor 7, and is adapted to push, on command, the loose cans 101 from the auxiliary platform 4 to the outlet conveyor 7, when the auxiliary platform 4 is horizontally aligned to the outlet conveyor 7, i.e. when the auxiliary platform 4 is in the first unloading position.

The products moving assembly 10, in turn, is substantially horizontally aligned to the outlet conveyor 8, and is adapted to push, on command, the loose bottles 101 or other products coming from the pallet 100 stationary on the lifting platform 3, from the auxiliary platform 4 to the outlet conveyor 8, when the auxiliary platform 4 is horizontally aligned to the outlet conveyor 8, i.e. when the auxiliary platform 4 is in the second unloading position.

With reference to Figures 1 to 9, preferably the depalletizing machine 1 additionally comprises an auxiliary pushing device 11, which is fixed on supporting framework 2 horizontally aligned and spaced in front of the gripping unit 5, i.e. substantially coplanar with the elevated plane P, with the capability of moving horizontally, on the elevated plane P, to and from the gripping unit 5, so as to selectively arranged itself in abutment on the upper layer of the pallet 100 stationary on the lifting platform 3, on the opposite side with respect to the gripping unit 5.

More in detail, the pushing device 11 is capable of moving horizontally on the elevated plane P to and from the gripping unit 5, so as to selectively horizontally push the rows of products 103 that make up the upper layer of the pallet 100 stationary on the lifting platform 3, towards the gripping unit 5.

In addition or alternatively, the pushing device 11 can be able to move horizontally to and from the gripping unit 5, so as to simply arrange itself in abutment on the last row of products 103 of the upper layer of the pallet 100 stationary on the lifting platform 3, in order to prevent accidental movement of the rows of products 103 present on the top of the pallet 100 stationary on the lifting platform 3.

In other words, the gripping unit 5 and the pushing device 11 are preferably arranged, at rest, on the elevated plane P, on opposite sides of the top of the vertical aisle engaged by the lifting platform 3, and are movable on the elevated plane P one towards the other advantageously independently of each other.

Clearly the gripping unit 5 and the pushing device 11 may also move on the elevated plane P one towards the other in a coordinated and synchronized manner.

More in detail, the pushing device 11 is preferably oblong in shape, and is preferably movable back and forth on the elevated plane P, advantageously while always remaining parallel to itself, between a first position and an second operating position.

In the first operating position (see Figures 1 to 6) the pushing device 11 is arranged spaced at the side of the top of the vertical aisle engaged by the lifting platform 3, on the opposite side with respect to the gripping unit 5. In the second operating position (see Figure 8), in turn, the pushing device 11 is vertically aligned with the lifting platform 3, i.e. it is arranged at the top of the vertical aisle engaged by the lifting platform 3, and is arranged in abutment on the loose products 101 that form the last row of products 103 of the upper layer of the pallet 100 stationary on the lifting platform 3, so as to horizontally push the entire upper layer of the pallet 100 towards the gripping unit 5, or to oppose any movement of the upper layer of the pallet 100 due to contact with the gripping unit 5.

In other words, the pushing device 11 is movable back and forth on the elevated plane P to and from a second operating position (see Figure 8) in which the pushing device 11 is vertically aligned to the lifting platform 3, and is arranged adjacent to the cans 101 that form the last lateral row of the upper layer of the pallet 100 stationary on the lifting platform 3.

With reference to Figures 1 to 6, in the example shown, in particular, the supporting framework 2 preferably has a substantially parallelepipedal-shaped cage structure, and the lifting platform 3 is preferably located inside the supporting framework 2 with the capability of moving vertically while remaining inside the same supporting framework 2.

More in detail, the lifting platform 3 is preferably fixed on the vertical uprights of the supporting framework 2 with the capability of moving vertically along the same vertical uprights.

With particular reference to Figures 4, 5, 6 and 8, in particular the lifting platform 3 preferably comprises: an horizontal rigid frame 15 advantageously with a horseshoe structure, which is preferably substantially rectangular in shape, is preferably fixed in a vertically slidable manner on the four vertical uprights of the supporting framework 2, and is centrally provided with a horizontal resting deck dimensioned so as to receive resting above the transport platform 102 of the pallet to be unpacked 100; and optionally also a preferably electrically- or pneumatically- operated, centering assembly (not shown in the figures), which is located on the horizontal rigid frame 15, and is capable of centring the platform 102 of the pallet to be unpacked 100 on the resting deck of the rigid frame 15 and optionally also to firmly lock the transportation platform 102 on the same resting deck.

Preferably, the depalletizing machine 1 is additionally provided with a first, preferably electrically operated, driving assembly 16, which is adapted to move, on command and preferably also in steps, the rigid frame 15 of the lifting platform 3 along the vertical uprights of the supporting framework 2, in a substantially vertical direction d₁, so as to vary/adjust on command the height from ground of the rigid frame 15 and of its resting deck.

In other words, the driving assembly 16 is adapted to progressively move the lifting platform 3 upwards along the vertical uprights of the supporting framework 2, so as to align each time the upper layer of the pallet to be unpacked 100 with the elevated plane P.

In the example shown, in particular, the driving assembly 16 preferably comprises, on each vertical upright of the supporting framework 2: a pair of gear wheels coplanar with each other, which are fixed in axially rotatable manner on the vertical upright, in proximity respectively of the upper end and the lower end of the same vertical upright; and an articulated belt or chain 17 which is looped around the two gear wheels, so that the two rectilinear sections of the articulated chain are parallel to the longitudinal axis of the vertical upright, i.e. substantially vertical.

Additionally, the driving assembly 16 preferably also comprises at least one and more conveniently a pair of electric motors 18, each of which is preferably fixed cantilevered on the top of a corresponding vertical upright of the rigid framework 2, and is adapted to drive into rotation, selectively in both rotation directions, the gear wheels fixed to the upper ends of at least two adjacent vertical uprights of the rigid framework 2.

More in detail, each electric motor 18 is mechanically connected to the upper gear wheels of two adjacent vertical uprights preferably via a gear train that also comprises a transversal drive shaft that extends horizontally astride the two vertical uprights and directly supports the upper gear wheels.

Preferably the two electric motors 18 are moreover arranged one horizontally aligned and coaxial to the other and are optionally also mechanically connected to one another by means of a transversal drive shaft.

The horizontal rigid frame 15 of lifting platform 3 is firmly fixed to a rectilinear section of each articulated chain 17 of the driving assembly 16, so as to move along the vertical uprights of supporting framework 2 together with the chains 17.

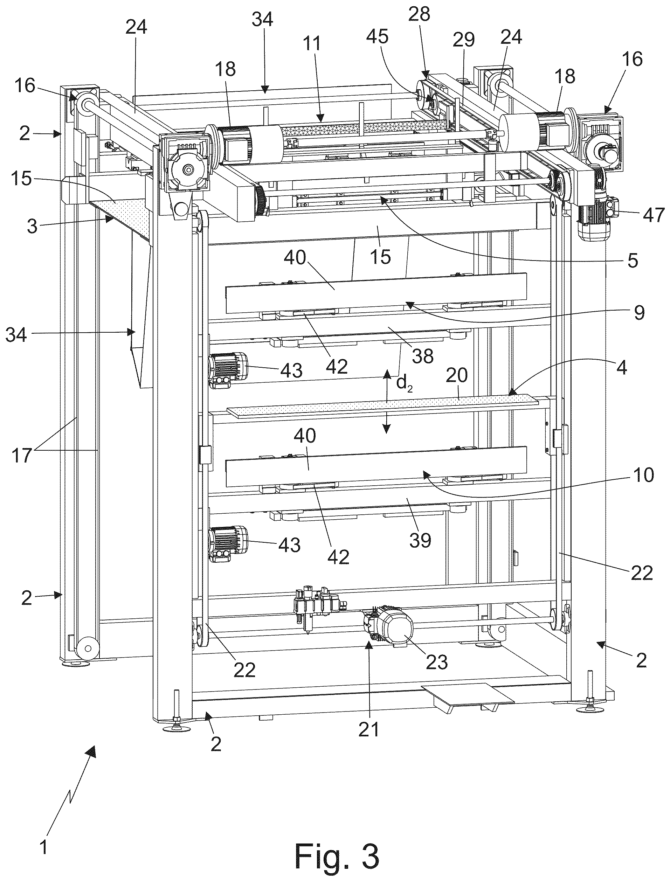

With reference to Figures 3, 4, 6 and 8, the auxiliary movable platform 4, in turn, is oblong in shape and is preferably fixed in a vertically slidable manner on a pair of adjacent vertical uprights of the supporting framework 2, so as to move beside the lifting platform 3 in a substantially vertical direction d₂.

More in detail, the auxiliary platform 4 extends like a bridge between two adjacent vertical uprights of supporting framework 2, and is preferably butt-fixed to both vertical uprights so as to freely move along the same vertical uprights.

With reference to Figures 3, 6 and 8, in particular, the auxiliary platform 4 preferably comprises: a supporting crossbeam 19, preferably rectilinear and preferably made of metal material, which extends horizontally astride said pair of vertical uprights of the supporting framework 2, and has the two ends fixed in a freely slidable manner on the same vertical uprights, so as to move along the vertical uprights in the direction d₂ while always remaining parallel to itself; and an upper horizontal shelf 20, preferably substantially elongated rectangular in shape, which is rigidly fixed above the supporting crossbeam 19, preferably with the longer sides parallel to the longitudinal axis of the crossbeam, and is dimensioned so as to receive resting thereon/accommodate a single row of products 103, or rather a single row of cans 101, bottles or other products coming from the top of the pallet 100.

Preferably, the depalletizing machine 1 is moreover provided with a second, preferably electrically-operated, driving assembly 21 which is adapted to move on command the supporting crossbeam 19 of the auxiliary platform 4 on the supporting framework 2, in the direction d₂, i.e. vertically, so as to align the upper shelf 20 of auxiliary platform 4, on choice, with the elevated plane P, with the products- resting and/or advancing plane of the outlet conveyor 7 or with the products- resting and/or advancing plane of the outlet conveyor 8.

In other words, the driving assembly 21 is adapted to move the auxiliary platform 4 up and down along the vertical uprights of supporting framework 2, between the loading position and said first and second unloading positions.

More in detail, the driving assembly 21 preferably comprises, on each of the two adjacent vertical uprights on which the auxiliary platform 4 slides: a pair of toothed pulleys coplanar to each other, which are fixed in axially rotatable manner on the vertical upright, in proximity of the upper end and of the lower end of the vertical upright; and a toothed belt 22 which is looped around said two toothed pulleys, so that the two rectilinear sections of the belt 22 are parallel to the longitudinal axis of the same vertical upright.

Additionally, the driving assembly 21 preferably moreover comprises also: an electric motor 23, which is preferably fixed cantilevered on a horizontal crossbeam of supporting framework 2 that rigidly connects the lower sections of the two vertical uprights that flank the auxiliary platform 4; and a gear train, which connects the electric motor 23 to the toothed pulleys located in proximity of the lower ends of the vertical uprights that flank the auxiliary platform 4, so as to allow the motor 23 to drive into rotation the same toothed pulleys selectively and alternatively in both directions of rotation.

The two opposite ends of the lower supporting crossbeam 19 of the auxiliary platform 4 are each fixed to a branch of the facing toothed belt 22 of the driving assembly 21, so that the lower supporting crossbeam 19 can move along the corresponding vertical uprights of the supporting framework 2 together with the toothed belts 22.

With reference to Figures 4, 6, 7 and 8, the gripping unit 5, in turn, is preferably firmly fixed on the top of the supporting framework 2, above the lifting platform 3 and the auxiliary platform 4, with the capability of freely moving/shifting on the supporting framework 2 in a substantially horizontal direction d₃, while remaining on the reference plane P.

More in detail, the gripping unit 5 is preferably fixed in a horizontally slidable manner on a pair of horizontal crossbeams 24 of supporting framework 2, which extend in direction d₃ spaced above the elevated plane P, and connect in rigid manner the upper ends of respective pairs of vertical uprights of the same supporting framework 2.

In particular, the gripping unit 5 preferably comprises: a substantially rectilinear, main support beam 25 preferably made of metal material, which extends horizontally and orthogonally to direction d₃, preferably spaced above the elevated plane P, and has its two ends fixed in a horizontally slidable manner on the supporting framework 2, or rather on the horizontal crossbeams 24 of supporting framework 2; and advantageously also a substantially rectilinear, auxiliary bar 26 preferably made of metal material, which extends parallel to the main support beam 25, spaced beside the latter, is floatingly attached to the same support beam 25, and directly supports the vacuum gripping equipment 6.

More in detail, the auxiliary floating bar 26 is preferably fixed to the main support beam 25 with the capability of freely shifting with respect to the latter in a direction d₄ substantially vertical, so as to be able to vary its distance from the elevated plane P, and the gripping unit 5 preferably also includes one or more linear actuators 27, advantageously with electric or pneumatic actuation, which are interposed between the main support beam 25 and the auxiliary bar 26, and are able to lift and lower, on command, the floating bar 26 by a few centimetres with respect to the main support beam 25.

Even more specifically, the linear actuators 27 are preferably structured so as to move vertically, i.e. in direction d₄, the auxiliary bar 26 between a raised position and a lowered position.

In the example shown, in particular, the vertical distance covered by the auxiliary floating bar 26 on moving between the raised position and the lowered position is preferably greater than 1 cm and/or less than 10 cm (centimetres).

The vacuum gripping equipment 6 of gripping unit 5, in turn, is preferably oblong in shape, and is preferably attached/fixed to the auxiliary bar 26 so as to be suspended spaced beside, and advantageously also slightly below, the support beam 25, thus to be arranged substantially coplanar to the elevated plane P.

More in detail, the vacuum gripping equipment 6 is preferably substantially rectilinear and preferably extends parallel to the support beam 25, at the side of the same beam.

The vacuum gripping equipment 6 is therefore horizontally movable on the elevated plane P in direction d₃, together with the main support beam 25, so as to be able to rest on the flank of the loose products 101, or rather of the cans 101 that are at the height of the elevated plane P, and form an entire row of products 103 of the upper layer of the pallet 100.

The vacuum gripping equipment 6 of gripping unit 5, in addition, is movable vertically, i.e. in the direction d₄, between the raised position and the lowered position so as to vary its position/distance from the elevated plane P.

With reference to Figures 1 to 8, the depalletizing machine 1 is moreover provided with a third driving assembly 28, preferably electrically-operated, which is adapted to move, on command, the support beam 25 of gripping unit 5 on the top of the supporting framework 2, in the direction d₃, to and from the top of the vertical aisle engaged by the lifting platform 3, so as to arrange the vacuum gripping equipment 6 resting on the flank of the loose products 101, or rather of the cans 101 which are at height of the elevated plane P and form an entire row of products 103 of the upper layer of the pallet to be unpacked 100.

More in detail, the two ends of the support beam 25 of gripping unit 5 are preferably fixed in slidable manner on the pair of horizontal crossbeams 24.

The driving assembly 28, in turn, preferably comprises, on each horizontal crossbeam 24 of supporting framework 2: a pair of toothed pulleys coplanar to each other, which are fixed in axially rotatable manner on the horizontal crossbeam 24, in proximity of the two ends of the same crossbeam; and a toothed belt 29 which is looped around the two toothed pulleys, so that the two rectilinear sections of the belt 29 are parallel to the horizontal crossbeam 24.

Additionally, the driving assembly 28 preferably also comprises an electric motor 30, which is fixed cantilevered on one of the two horizontal crossbeams 24 of supporting framework 2; and a gear train, which connects the electric motor 30 to one of the two toothed pulleys present on each horizontal crossbeam 24, so as to allow the electric motor 30 to drive into rotation the same toothed pulleys selectively and alternatively in both directions of rotation.

The two opposite ends of the support beam 25 of gripping unit 5 are firmly fixed each to a branch of the facing toothed belt 29 of the driving assembly 28, so that the support beam 25 can move along the horizontal crossbeams 24 of the supporting framework 2 together with the toothed belts 29.

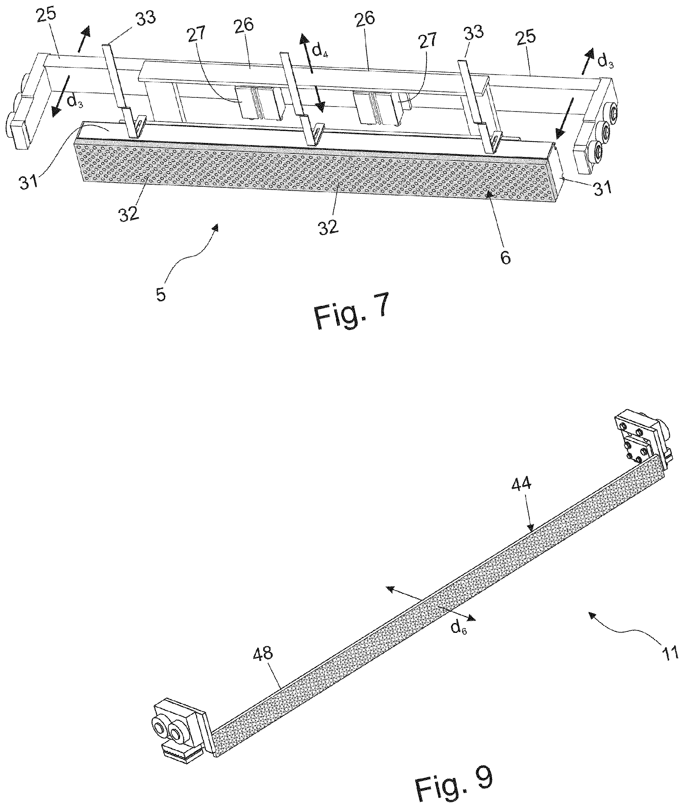

With reference to Figure 7, in turn the vacuum gripping equipment 6 preferably comprises: an oblong and rectilinear box-like container 31, preferably made of metal material, which preferably has a substantially rectangular cross-section, extends parallel to the main support beam 25 spaced beneath the auxiliary floating bar 26 so as to be arranged roughly beside the support beam 25, and is finally fixed in rigid manner to the same auxiliary bar 26; and a mat of soft and elastically deformable material 32, preferably made of polymeric material foam, which is firmly fixed on the flank of the box-like container 31 on the opposite side with respect to the support beam 25, and is preferably provided with a multitude of transversal through ducts that directly communicate with the inner cavity of the box-like container 31.

Preferably the vacuum gripping equipment 6 moreover comprises also a preferably electrically operated, air suction device (not shown in the figures) that is connected to the inner cavity of the box-like container 31, and is adapted to continuously suck air from the inner cavity of the box-like container 31, so as to stably maintain the inner cavity at a pressure lower than the ambient pressure.

With reference to Figures 6, 7 and 8, moreover the gripping unit 5 is preferably also provided with a series of tray-pushing antennas 33, which extend cantilevered from the box-like container 31 upwards, preferably in a substantially vertical direction, so as to come into abutment on the lateral edge of the support-board or tray 104 that rests on the upper layer of the pallet to be unpacked 100.

Preferably, the depalletizing machine 1 additionally comprises also a large tray-collecting storage 34 preferably with a suspended pocket structure, which is firmly fixed on the supporting framework 2 at the side of the top of the vertical aisle engaged by the lifting platform 3, on the opposite side with respect to the auxiliary platform 4, and is arranged in an elevated position so that its upper mouth is roughly horizontally aligned with the elevated plane P.

When the gripping unit 5 moves horizontally towards the upper layer of the pallet to be unpacked 100, the tray-pushing antennas 33 abut on the lateral edge of the support-board or tray 104 resting on top of the upper layer of the pallet 100, so as to push it progressively in the direction d₃, towards the tray-collecting storage 34.

With reference to Figures 1, 2, 5, 6 and 8, the outlet conveyor 7 in turn preferably comprises: a linear conveyor 35, which is arranged in a substantially horizontal position, beside the vertical aisle engaged by the movable platform 4, so as to receive the loose products 101, or rather the cans 101, present on the movable platform 4 stationary in the first unloading position; and a gravity product overturner 36, which is located downstream of the linear conveyor 35, and is structured so as to tip over the loose products 101, or rather the cans 101, which in succession leave the linear conveyor 35.

Preferably, the linear conveyor 35 is furthermore an electrically-operated belt conveyor or the like, advantageously substantially rectilinear, which is fixed on the supporting framework 2 in a substantially horizontal position, so that its products advancing plane is at a height from ground substantially equal to the height h₁.

Clearly, in a different embodiment, the outlet conveyor 7, or rather the linear conveyor 35 and/or the gravity product overturner 36, could be located on a self-supporting structure separate and distinct from the supporting framework 2.

The gravity product overturner 36, in turn, is arranged downstream of the linear conveyor 35, or rather downstream of the belt conveyor, and is structured so as to impart, to the succession of cans 101 or other loose products that leave the linear conveyor 35, a rotation of a predetermined value and advantageously equal to about 180° or 360.

More in detail, the gravity product overturner 36 is preferably provided with an oblong tubular guide, advantageously with a cage structure, which has a cross-section roughly complementary to that of a loose product 101, so as to be engaged in freely slidable manner by the loose products 101 that, in succession, leave the linear conveyor 35, and extends longitudinally following a descending path roughly helicoidal in shape, so as to tip over, advantageously by 180° or 360°, the loose products 101 that travel along the same tubular guide 36.

In other words, the gravity product overturner 36 is preferably provided with an oblong tubular guide, advantageously with a cage structure, which has a cross-section roughly complementary to that of a can 101, so as to be engaged in freely slidable manner by the loose cans 101 that, in succession, leave the linear conveyor 35, and extends longitudinally following a descending path roughly helicoidal in shape, so as to tip over, advantageously by 180° or 360°, the cans 101 that travel along the same tubular guide 36.

More in detail, the gravity product overturner 36 is preferably a "gravity twister" for jars and cans of a known type.

The outlet conveyor 8, in turn, preferably comprises (only) a linear conveyor 37, which is arranged in a substantially horizontal position, beside the vertical aisle engaged by the movable platform 4, so as to receive the loose products 101, or rather the cans 101, present on the movable platform 4 stationary in the second unloading position.

Preferably, also the linear conveyor 37 is moreover an electrically-operated belt conveyor or the like, advantageously substantially rectilinear, which is fixed on the supporting framework 2 in a substantially horizontal position, so that its products advancing plane is at a height from ground substantially equal to the height h₂.

Clearly, in a different embodiment, the outlet conveyor 8, or rather the linear conveyor 37, may be located on a self-supporting structure separate and distinct from the supporting framework 2.

With reference to Figures 1 to 6, both products moving assemblies 9 and 10, in turn, are preferably rigidly fixed on respective horizontal supporting crossbeams 38 and 39 of rigid framework 2, which extend as a bridge between the two vertical uprights that flank and support the auxiliary platform 4, and are vertically spaced from each other.

Preferably each products moving assembly 9, 10 additionally comprises: a transversal pushing blade 40, oblong in shape, which is arranged in a substantially horizontal position beside the vertical aisle engaged by the auxiliary platform 4, at a height from the ground slightly greater than that of the auxiliary platform 4 in the first or in the second unloading position and/or than that of the products-resting and/or advancing plane of the outlet conveyor 7 or 8; and a preferably electrically-operated, shifting device 41 which is interposed between the pushing blade 40 and the supporting crossbeam 38 or 39 so as to support the pushing blade 40, and is able to move the pushing blade 40 in a direction d₅ substantially horizontally and preferably also substantially parallel to the direction d₃, advantageously also while keeping the pushing blade 40 parallel to itself, so as to push the loose products 101 resting on the auxiliary platform 4 stationary in the first or in the second unloading position, from the auxiliary platform 4 onto the outlet conveyor 7 or 8.

More in detail, the transversal pushing blade 40 is preferably substantially rectilinear and substantially perpendicular to the direction d₅, and is horizontally movable while remaining substantially parallel to the support beam 25 of gripping unit 5 above.

Additionally, the transversal pushing blade 40 is preferably suspended above the supporting crossbeam 38 or 30 of the supporting framework 2, at a height from ground slightly greater than the height h₁ or h₂, so as to be movable above, and more or less grazing, the auxiliary platform 4 stationary in the respective first or second unloading position, and the products- resting and/or advancing plane of the outlet conveyor 7 or 8.

Preferably the transversal pushing blade 40 is furthermore arranged on the opposite side of the vertical aisle engaged by the auxiliary platform 4 with respect to the outlet conveyors 7 and 8.

Consequently, the shifting device 41 is preferably adapted to move the pushing blade 40 horizontally through the vertical aisle engaged by the auxiliary platform 4, so as to bring the pushing blade 40 into abutment on the entire row of loose products 101, or rather the row of bottles or cans, resting on the auxiliary platform 4 stationary in the first or second unloading position, and then to horizontally push the row of loose products 101, or rather the row of bottles or cans, onto the adjacent outlet conveyor 7 or 8.

In the example shown, in particular, the shifting device 41 preferably comprises: a pair of articulated arms 42 with pantograph movement, which are mounted movable above the supporting crossbeam 38 or 39 so as to be able to open/spread in a scissor-like manner on a substantially horizontal plane, in the direction d₅, and at the same time directly support the pushing blade 40; and a preferably electrically-operated, servomotor 43 that is preferably located beneath the supporting crossbeam 38 or 39, and is mechanically connected to both articulated arms 42 so as to open and close them in a synchronized manner.

The articulated arms 42 with pantograph movement are components already known in the field and therefore won't be further described.

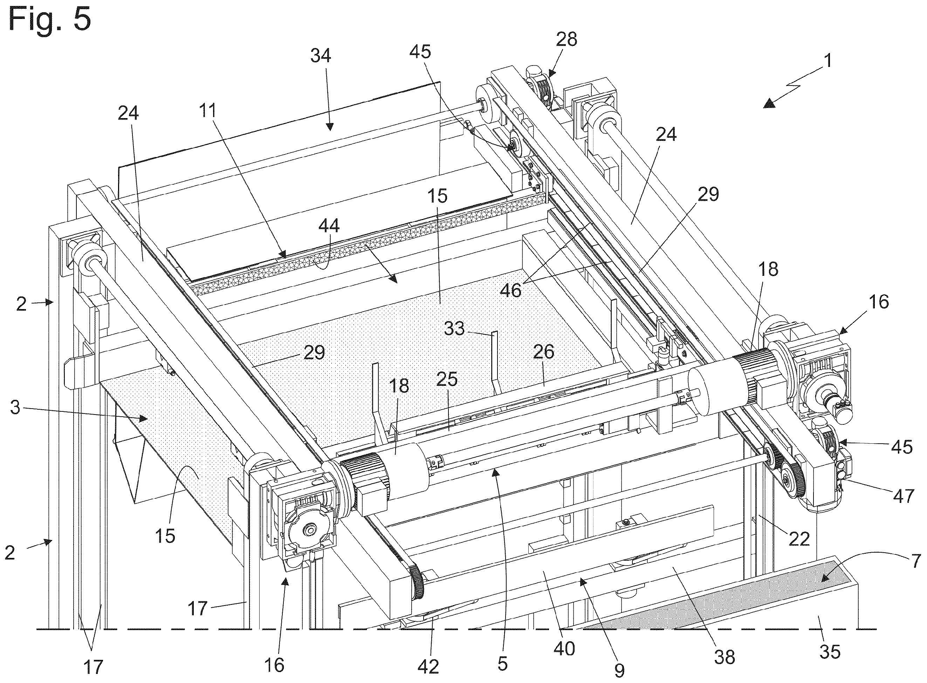

With reference to Figures 5, 6, 8 and 9, similarly to the gripping unit 5, also the pushing device 11 is preferably oblong in shape, and is preferably mounted movable on the top of the supporting framework 2, so as to freely move on the supporting framework 2 in a direction d₆ that is substantially horizontal and parallel to the direction d₃, advantageously while always remaining parallel to itself.

More in detail, the pushing device 11 preferably comprises an oblong-shaped pushing blade 44, which lies substantially on the elevated plane P, and is rectilinearly movable on the rigid supporting framework 2 to and from the gripping unit 5, advantageously while always remaining parallel to itself.

Even more specifically, the pushing blade 44 is preferably substantially rectilinear, and extends horizontally and orthogonally to the direction d₆, on the top of supporting framework 2, so as to be substantially coplanar with the elevated plane P.

In addition, the pushing blade 44 is connected to the rigid supporting framework 2 so as to be able to move rectilinearly in the direction d₆, to and from the gripping unit 5.

With particular reference to Figures 6 and 8, the depalletizing machine 1 is additionally provided with a preferably electrically-operated, fourth driving assembly 45 which is adapted to move, on command, the transversal pushing blade 44 horizontally in the direction d₆, to and from the gripping unit 5, advantageously while keeping the transversal pushing blade 44 always parallel to itself.

More in detail, the pushing blade 44 of pushing device 11 preferably extends horizontally between the two horizontal crossbeams 24 of supporting framework 2, and is preferably connected to the same horizontal crossbeams 24 so as to shift horizontally to and from the facing gripping unit 5, advantageously while remaining parallel to itself and substantially coplanar with the elevated plane P.

The driving assembly 45, in turn, is preferably structured so as to move/shift the transversal pushing blade 44 horizontally in the direction d₆ to and from the gripping unit 5, so as to selectively arrange the transversal pushing blade 44 in abutment on the last row of products 103 of the upper layer of the pallet 100 stationary on the lifting platform 3.

Preferably, the driving assembly 45 is furthermore located on the horizontal crossbeams 24 of supporting framework 2 and is advantageously also structured so as to directly support the transversal pushing blade 44.

In other words, the pushing blade 44 of pushing device 11 is preferably fixed to the driving assembly 45 which in turn is fixed to the horizontal crossbeams 24 of supporting framework 2.

With reference to Figures 6 and 8, in the example shown, in particular, the driving assembly 45 preferably comprises, on each horizontal crossbeam 24 of the supporting framework 2: a pair of toothed pulleys coplanar to each other, which are fixed in axially rotatable manner on the horizontal crossbeam 24, in proximity of the two ends of the same crossbeam; and a toothed belt 46 which is looped around the two toothed pulleys, so that the two rectilinear sections of the belt 46 are parallel to the horizontal crossbeam 24.

More in detail, the toothed pulleys and the toothed belt 46 of the driving assembly 45 are preferably substantially coplanar with the toothed pulleys and the toothed belt 29 of the driving assembly 28.

Preferably the toothed belt 46 is furthermore located inside the toothed belt 29.

In addition, the driving assembly 45 preferably furthermore comprises: an electric motor 47, which is fixed cantilevered on one of the two horizontal crossbeams 24 of supporting framework 2; and a gear train, which connects the electric motor 47 to one of the two toothed pulleys of the driving assembly 45 that are present on each horizontal crossbeam 24, so as to allow the electric motor 47 to drive into rotation the same toothed pulleys selectively and alternatively in both directions of rotation.

With reference to Figure 9, on the other hand, the transversal pushing blade 44 preferably includes, or rather consists of, a rectilinear bar 48 advantageously made of metal material and/or with a substantially rectangular cross-section, which extends horizontally and orthogonally to the direction d₆, between the horizontal crossbeams 24 of supporting framework 2, so as to be substantially coplanar with the elevated plane P.

The two opposite ends of the rectilinear bar 48, moreover, are preferably firmly fixed each to a branch of the facing toothed belt 46 of driving assembly 45, so that the rectilinear bar 48 is movable along the horizontal crossbeams 24 of supporting framework 2 together with the toothed belts 46.

Optionally the lateral flank of the rectilinear bar 48 facing the gripping unit 5 is furthermore covered by a layer of soft and elastically deformable material, advantageously made of polymeric material foam.

Finally the depalletizing machine 1 preferably furthermore comprises an electronic control apparatus (not shown), which is adapted to control the driving assemblies 16, 21, 28 and 45, the actuators 27 of gripping head 5 and the servomotors 43 of the products moving assemblies 9 and 10, so as to automatically unpack the pallet 100 temporarily resting on the lifting platform 3.

Preferably said electronic control apparatus is moreover able to command/ drive the air suction device of the vacuum gripping equipment 6, so as to also adjust/vary the flow rate of the air that is sucked through the mat of soft and elastically deformable material 32.

Operation of depalletizing machine 1 is easily inferable from what written above and therefore requires no further explanation.

The advantages resulting from the particular structure of the depalletizing machine 1 are remarkable and numerous.

Firstly, the presence of two outlet conveyors 7 and 8 vertically offset from one another allows, when necessary, the use of gravity to carry out the tip over by 180° or 360° of the loose products 101, or rather of the cans 101, at the outlet of the depalletizing machine 1. Operation that allows to remove any solid or liquid residues accumulated inside the containers.

In addition, the presence of the pushing device 11 allows to minimize the stroke of the gripping unit 5 on the elevated plane P, thus increasing the productivity of the machine.

More in detail, the auxiliary pushing device 11 can be advantageously used to move closer, as the rows of products 103 are picked up, what remains of the upper layer of the pallet 100, to the edge of the pallet 100 closest to the gripping unit 5. Trick that allows to reduce/minimize the length of the path that the gripping unit 5 must travel to move from the first to the second operating position and vice versa.

Alternatively, the auxiliary pushing device 11 can be advantageously used to prevent the upper layer of the pallet 100 stationary on the lifting platform 3 from accidentally sliding on the support-board or tray 104 away from the gripping unit 5, when the gripping unit 5 abuts on the lateral row of products 103 of the upper layer of the pallet 100 to pick it up.

Phenomenon that occurs very often when the loose products 101 have a low weight, such as beverage cans, and that significantly lengthens the unpacking times of the pallet 100.

It is finally clear that modifications and variations may be made to the above-described depalletizing machine 1 without thereby departing from the scope of protection of the present invention.

For example, in a less sophisticated embodiment of the gripping unit 5, the vacuum gripping equipment 6, or rather the box-like container 31, can be rigidly fixed directly on the flank of the support beam 25.

Additionally, in an alternative embodiment of the vacuum gripping equipment 6, the box-like container 31 and the mat of soft and elastically deformable material 32 may be replaced by a dense series/multitude of small-sized suction cups, which are fixed cantilevered on an advantageously plate-like supporting structure which in turn is advantageously rigidly fixed to the auxiliary floating bar 26 or directly to the main support beam 25.

## Claims

1. A depalletizing machine (1) comprising: a rigid supporting framework (2), which is adapted to stably rest on the ground; a lifting platform (3), which is adapted to receive resting above the pallet to be unpacked (100) and is vertically movable on the rigid supporting framework (2), so as to lift the pallet to be unpacked (100) from the ground and to align the upper layer (102) of the pallet to an elevated reference plane (P); an auxiliary movable platform (4), which is dimensioned so as to receive/accommodate a row (103) of products (101) coming from the pallet (100) stationary on the lifting platform (3), and is vertically movable on the rigid supporting framework (2), alongside the lifting platform (3); a gripping unit (5), which lies on said reference plane (P), is adapted to seize and firmly hold an entire row (103) of products (101), and is horizontally movable on the rigid supporting framework (2) between a first operating position wherein the gripping unit (5) is located at the side of the lifting platform (3), substantially vertically aligned to the auxiliary movable platform (4), and a second operating position wherein the gripping unit (5) is vertically aligned to the lifting platform (3) so as to seize and hold a single row (103) of products (101) from the upper layer (102) of the pallet to be unpacked (100); and a first outlet conveyor (8), which is adapted to feed a succession of loose products (101) at the outlet of the machine, and is positioned beside the vertical aisle engaged by said auxiliary movable platform (4), spaced below said reference plane (P);
the depalletizing machine (1) being **characterised in that** it also comprises a second outlet conveyor (7), which is adapted to feed a succession of loose products (101) out of the machine, and is located beside the vertical aisle engaged by said auxiliary movable platform (4), spaced below said reference plane (P) and spaced above the first outlet conveyor (7); **and in that** the auxiliary movable platform (4) is vertically movable between a loading position wherein said auxiliary movable platform (4) is aligned to said reference plane (P) and is capable of loading/receiving a row (103) of products (101), a first unloading position wherein said auxiliary movable platform (4) is horizontally aligned to the first outlet conveyor (8) so as to unload the previously loaded row (103) of products (101) on said first outlet conveyor (8), and a second unloading position wherein said auxiliary movable platform (4) is horizontally aligned to the second outlet conveyor (7) so as to unload the previously loaded row (103) of products (101) on said second outlet conveyor (7).

2. Depalletizing machine according to Claim 1, wherein the second outlet conveyor (7) comprises: a linear conveyor (35), which is located beside the vertical aisle engaged by said auxiliary movable platform (4); and a gravity product overturner (36), which is located downstream of said linear conveyor (35), and is structured so as to overturn the loose products (101) that in succession leave said linear conveyor (35).

3. Depalletizing machine according to claim 2, wherein the gravity product overturner (36) is provided with an oblong tubular guide, which has a cross-section substantially complementary to that of a product (101), so as to be engaged in a slidable manner by the loose products (101) leaving the linear conveyor (35), and extends longitudinally following a descending path of roughly helicoidal in shape.

4. Depalletizing machine according to any one of the preceding claims, **characterised by** additionally comprising a first products moving assembly (10), which is horizontally aligned to said first outlet conveyor (8) and is adapted to move the products (101) from the auxiliary movable platform (4) to the first outlet conveyor (7) when the auxiliary movable platform (4) is in the first unloading position; and a second products moving assembly (9), which is horizontally aligned to said second outlet conveyor (7) and is adapted to move the products (101) from the auxiliary movable platform (4) to the second outlet conveyor (8) when the auxiliary movable platform (4) is in the second unloading position.

5. Depalletizing machine according to any one of the preceding claims, **characterised by** additionally comprising an auxiliary pushing device (11), which is located on said reference plane (P) on the side opposite to the vertical aisle engaged by said lifting platform (3) with respect to the gripping unit (5), and is horizontally movable on the rigid supporting framework (2) to and from the gripping unit (5), so as to selectively arrange itself in abutment on the upper layer of the pallet (100) stationary on the lifting platform (3), on the opposite side with respect to the gripping unit (5).

6. Depalletizing machine according to claim 5, wherein the auxiliary pushing device (11) comprises an oblong-shaped pushing blade (44), which lies on said reference plane (P) and is rectilinearly movable on the rigid supporting framework (2) to and from said gripping unit (5) while remaining parallel to itself.

7. Depalletizing machine according to claim 6, wherein the pushing blade (44) of the auxiliary pushing device (11) is horizontally movable on the rigid supporting framework (2) independently with respect to the gripping unit (5).

8. Depalletizing machine according to any one of the preceding claims, wherein the gripping unit (5) is provided with a vacuum gripping equipment (6), which lies on said reference plane (P), and is capable of seizing and holding the products (101) that contribute to form a single row (103) of products (101) of the upper layer of the pallet to be unpacked (100), by vacuum gripping the side of the single loose products (101).

9. Depalletizing machine according to any one of the preceding claims, wherein the auxiliary movable platform (4) is oblong in shape, extends horizontally adjacent to the vertical aisle engaged by said lifting platform (3), and is superiorly provided with a horizontal support surface, which is dimensioned to accommodate a one and only row of loose products (101).

10. Depalletizing machine according to any one of claims 2 to 9, wherein the linear conveyor (35) of said second outlet conveyor (7) is a substantially rectilinear belt conveyor that is fixed to the rigid supporting framework (2) in a substantially horizontal position.

11. Depalletizing machine according to any one of the preceding claims, wherein said first outlet conveyor (8) comprises a substantially rectilinear belt conveyor (37) that is fixed to the rigid supporting framework (2) in a substantially horizontal position.
